(19) Europäisches Patentamt

European Patent Office

Office européen des brevets

(11) **EP 1 627 010 B1**

(12) **EUROPEAN PATENT SPECIFICATION**

(45) Date of publication and mention
of the grant of the patent:
**29.11.2006 Bulletin 2006/48**

(51) Int Cl.:
***C08J 5/18*** (2006.01)

(21) Application number: **04748578.4**

(22) Date of filing: **14.05.2004**

(86) International application number:
**PCT/NL2004/000333**

(87) International publication number:
**WO 2004/101659 (25.11.2004 Gazette 2004/48)**

(54) **MICROPOROUS FILM**

MIKROPORÖSER FILM

FILM MICROPOREUX

(84) Designated Contracting States:
**DE FR GB NL**

(30) Priority: **15.05.2003 EP 03076460**

(43) Date of publication of application:
**22.02.2006 Bulletin 2006/08**

(73) Proprietor: **Fuji Photo Film B.V.**
**5047 TK Tilburg (NL)**

(72) Inventors:
• **DE VRIES, Ieke, Gerke**
**NL-5171 WV Kaatsheuvel (NL)**

• **MORI, Fuyuhiko**
**Fujinomiya, 418-0044 (JP)**

(74) Representative: **Winckels, Johannes Hubertus F.**
**Vereenigde**
**Johan de Wittlaan 7**
**2517 JR The Hague (NL)**

(56) References cited:
**EP-A- 0 744 284      WO-A-02/053391**
**GB-A- 2 296 216      US-A- 4 075 050**
**US-A- 5 955 187**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of invention

The present invention relates generally to a microporous film, in particular a microporous film, which can be used in an ink-jet recording medium of photographic quality that has excellent ink absorption speed, good drying characteristics and a good image printing quality.

### Background of the invention

Microporous materials comprising thermoplastic organic polymer, large proportions of filler particles, and large void volumes are known and have many valuable properties. Such microporous materials are durable and many of them are particularly useful as printing substrates, which can be used for example in ink jet printing applications.

In a typical ink-jet recording or printing system, ink droplets are ejected from a nozzle at high speed towards a recording element or medium to produce an image on the medium. The ink droplets, or recording liquid, generally comprise a recording agent, such as a dye, and a relatively large amount of solvent in order to prevent clogging of the nozzle. The solvent, or carrier liquid, typically is made up of water, and organic material such as monohydric alcohols and the like. An image recorded as liquid droplets requires a receptor on which the recording liquid dries quickly without running or spreading. High quality image reproduction using ink-jet printing techniques requires receptor substrates, typically sheets of paper or opaque or transparent film, that readily absorb ink droplets while preventing droplet diffusion or migration. Good absorption of ink encourages image drying while minimizing dye migration by which good sharpness of the recorded image is obtained.

There are in general two approaches for producing ink-jet recording media with photographic quality and good drying properties.

One approach for producing ink-jet recording media with photographic quality and good drying properties is the so called "non-microporous film type" as proposed in several patent publications such as EP-A-806 299 and JP-A-22 76 670. For this type of ink-jet recording medium, at least one ink receptive layer is coated on a support such as a paper or a transparent film. The ink receptive layer typically contains various proportions of water swellable binders and fillers. The proportions of these components affect the properties of the coatings, in particular ink absorption properties and the gloss quality appearance of the ink-jet media. This so-called swellable type of ink-jet recording media may give less dye fading, but generally dries more slowly.

Another approach is to provide a substrate with a porous layer, which can act as the ink-receiving layer. However, this known technique may give problems as to the gloss of the paper. In a specific embodiment of the known technique of substrates provided with a porous layer, there is provided on top of the porous layer an ink-receiving layer to enhance the gloss. In this microporous type, the microporous film has as the primary function to absorb the ink solvent. The typical microporous film suitable for this purpose is described *inter alia* in US-A-4 833 172, US-A-4 861 644 and US-A-5 326 391.

One of the important properties of an ink-jet receptive coating formulation is the liquid absorptivity. The majority, if not all, of the ink solvent has to be absorbed by the coating layer itself. Only when paper or cloth or cellulose is used as a support, some part of the solvent may be absorbed by the support.

As said before, the microporous film has the primary function to absorb the ink solvent. This so-called "microporous film type" is superior in drying time to the non-microporous type especially due to its high absorption speed for the ink-solvent. There are various options to apply a microporous layer onto a substrate. One possibility is to coat a microporous layer directly onto a substrate as described in EP-A-0 812 697. Another way is to laminate a hydrophilic microporous sheet to a substrate.

One of the hygroscopic, solvent absorbing microporous sheets suitable for this purpose is described among others in US-A-4 833 172, US-A-4 861 644 and US-A-5 326 391 and commercially available under the name TESLIN®. The use of this film in ink jet applications gives a very good drying speed, however without top coating the gloss is low. In US-A-5 605 750 and WO-A-99/41086, it is suggested to apply an ink-receiving layer on top of this microporous film in order to increase the colour density, glossiness, etc.

The manufacturing of this TESLIN® film is not very environmental friendly due to the use of halogenated hydrocarbons. Another disadvantages of the above mentioned microporous film is its thickness, which commercially is minimal 150 μm. This is too much to be readily laminated onto a base paper support commonly used in the photographic industry. The use of this film is therefore economically, technically and environmentally not preferred.

There are a lot of other microporous films, which are significantly thinner (thickness less than 150 μm) and cheaper than the said hydrophilic microporous film. Some examples thereof have been described in WO-A-96/19346, BE-A-1 012 087, EP-A-0 283 200 and US-A-4 350 655. These microporous films are made by melt extrusion of hydrophobic resins comprising a filler giving a ply and stretching the resulting ply uni-axially or bi-axially to give a film. The amount and the size of the pores are very much dependant on the stretching ratio, the amount, shape and size of the fillers used and the kind of stretching applied.

For most films described in the prior art the hydrophobic nature is an important feature. US-A-4 318 950 describes a waterproof synthetic paper with a base layer comprising less than 20% by weight of inorganic filler. GB-A-2 296 216 is directed to liquid impermeable films with thin skin layers containing no or low amounts of filler. EP-A-0 744 284 describes a multilayer film suitable for absorbing hydrophobic offset printing ink. These films are hydrophobic and thus water repellent by nature and have to be made hydrophilic in order to be able to absorb ink jet ink. One method to make a hydrophobic film hydrophilic is by impregnating the film after extrusion, with a hydrophilic substance as described in WO-A-02/053391. Another method is to use a hydrophilic additive during extrusion of the film as described in WO-A-03/016068. When using a high amount of fillers in the melt extrusion formulation, the sheet easily breaks during stretching. In order to prevent this coated pigments have been developed as described WO-A-00/05295. The filler particles, which are usually calcium carbonate that is white and low in price, need to be treated in order to make the filler hydrophobic and to obtain a polymer-loading amount, which is preferably higher than 65 wt%. An even higher amount of filler is preferable, because after stretching a higher pore volume will result, which will give an improved solvent absorbing property. From an economical point of view it is cheaper to use unmodified filler, but than the web breaks easily at low levels of stretching.

There remains therefore a need for having a microporous film that is suitable to be used as an ink solvent absorbing layer for the ink jet media, which is economically attractive using low cost resins and fillers and which is thin enough, has enough void volume and has a high ability to absorb the ink solvent. It is towards fulfilling this need that the present invention is directed.

## Summary of the invention

The object of the present invention is to solve, at least in part, the above-mentioned problems associated with the prior art. The present invention is directed to a microporous film comprising a multilayer of hydrophobic thermoplastic resins in which at least one of the layers comprises at least one filler in an amount of more than 50 wt.% and a hydrophilic component and in which at least one of the remaining layers contains at least one filler in the amount of more than 30 wt.%, but not more than 50 wt.%. The layers of said multilayer is thus made hydrophilic. This is done by using a hydrophilic component during melt extrusion of the ply, which is consecutively stretched to give a microporous film. The layer with the filler content of > 50% comprises a hydrophilic component. In another embodiment of this invention said microporous film is applied on a support to form an ink jet recording medium. In yet another embodiment of this invention said ink jet recording medium is coated with a topcoating to enhance amongst others the gloss. Said recording medium with or without the top coating has advantageous properties in relation to ink absorption speed, wettability characteristics and image printing quality, which makes the media of the present invention particularly suitable for producing images of photographic quality. Although a number of embodiments of the invention is described herein with particular reference to inkjet printing, it will be apparent to the skilled person that the high quality recording media of the present invention are not limited to inkjet recording media (*viz.* media suitable to be printed on using inkjet printers), but that it is within the scope of the present invention to provide recording media that are suitable for creating high quality images by using other techniques as well, such as Giclée printing, colour copying, screen printing, gravure, dye-sublimation, flexography, and the like.

Thus an inkjet recording medium according to the present invention comprises:

> a support, and a microporous film adhered to said support, wherein said microporous film has at least two layers of hydrophobic resin in which one layer comprises at least one filler in an amount > 50 weight% and one or more of the other layers comprises at least one filler in an amount > 30 and ≤ 50 weight%. The microporous film of this inkjet medium, preferably has interconnecting channels between the pores, with a void volume between 25 to 80 volume percent of the total microporous film. The hydrophobic film may be made hydrophilic by impregnating the film as such with a hydrophilic coating or impregnating it when applied to a support. Another way of making the film hydrophilic is by using a hydrophilic component during melt extrusion and subsequent stretching of the extruded ply to give a microporous film; this microporous film can be made even more hydrophilic by treating said microporous film with a hydrophilic coating after and/or before adhering said film onto the support.

Another aspect of this invention is to provide ink jet media comprising a support and a microporous film wherein the microporous film is characterised by a multitude of layers in which the amount of at least one filler is > 50% in one or more layers and in which the amount of at least one filler is > 30% and ≤ 50% in one or more of the other layers and obtainable by the method of BE-A-1 012 087. Accordingly, another aspect of the present invention is the use of a specific microporous film in ink jet media, which microporous film is obtainable by a method comprising the successive steps of:

- preparing at least one mixture comprising a polyolefin matrix, containing at least one polymer and at least one inorganic and/or organic filler in an amount > 50% and preparing at least one mixture comprising a polyolefin matrix, containing at least one polymer and at least one inorganic and/or organic filler in an amount > 30% and ≤ 50%; extruding at least both mixtures consecutively or simultaneously into one ply,
- pre-stretching the ply with a drag roll;
- cooling and solidifying the pre-stretched ply using the drag roll;
- drawing the solidified ply at sufficient temperature to form the microporous film, whereby:

  - the cooling of the pre-stretched melting ply by the drag roll is partial and limited in a controlled manner at a temperature within the range required for its drawing; and
  - the drawing of the ply, brought to the required temperature for drawing through partial cooling is carried out by traction at the time of its tangential separation from the drag roll, the said roll acting as take-up roller for drawing.

## Detailed description

The present invention is directed to a microporous film comprising a multilayer of hydrophobic thermoplastic resins in which at least one of the layers comprises at least one filler in an amount of > 50 wt.% and a hydrophilic component and in which at least one of the remaining layers contains at least one filler in the amount of > 30 wt.% and ≤ 50 wt.%. In our research to obtain an ink-jet recording medium with excellent drying properties using hydrophobic microporous membranes which are made hydrophilic we could not increase the drying properties beyond a certain value due the fact, that we could not increase the number of micropores. The method to increase the number of micropores is to use very fine filler grades or to increase the amount of filler in the hydrophobic thermoplastic resin, which is extruded. However if we use more filler than 55 weight% the ply that is formed after melt extrusion breaks at the stretching process before the intended stretch ratio is achieved. It has been described in US-A-5 993 589 that a web break can be prevented by applying a non filled flexible resin like polyurethane to the filled resin layer. Upon stretching this composition the filled matrix cannot break because the flexible resin prevents breaking from happening. Using such a film for an ink jet application does not give the full benefit from using a microporous sheet as the flexible layer will not be penetrated by water.

We have now surprisingly found, that we can increase the amount and volume of micropores by extruding several layers to form one ply in which at least one of the layers comprising at least one filler in an amount > 50 weight% and at least one layer comprising at least one filler in an amount of > 30 and ≤ 50 weight%. At the stretching process the resulted ply could be stretched in the same amount as a mono extruded ply with a much lower amount of filler, without breaking. Using this method we can achieve a higher void volume compared to previous methods. Using the after stretching said ply obtained microporous film, attached to a support in an ink jet application gives improved drying properties.

In one embodiment of the present invention the recording medium is produced as follows:

- prepare at least one mixture comprising a polyolefin matrix, containing at least one polymer and at least one inorganic and/or organic filler in an amount > 50%
- prepare at least one mixture comprising a polyolefin matrix, containing at least one polymer and at least one inorganic and/or organic filler in an amount > 30% and ≤ 50%;
- extruding at least both mixtures consecutively or simultaneously into one ply,
- pre-stretching the ply with a drag roll;
- cooling and solidifying the pre-stretched ply using the drag roll;
- drawing the solidified ply at sufficient temperature to form the microporous film, whereby:

  - the cooling of the pre-stretched melting ply by the drag roll is partial and limited in a controlled manner at a temperature within the range required for its drawing; and
  - the drawing of the ply, brought to the required temperature for drawing through partial cooling is carried out by traction at the time of its tangential separation from the drag roll, the said roll acting as take-up roller for drawing.

The resulting microporous film contains voids on the surface and pores inside the film. In the present application no distinction is made between "voids" and "pores". Consequently, the term "pore(s)" as used herein covers both void (s) and pore(s). The same counts for the term "void(s)". Preferably in the microporous film obtained by this method the volume of pores of diameter larger than 100 nm is at least 25 percent by volume of the total pore volume of said microporous film. The total pore volume can be as high as 80% by volume of said microporous film.

This method for manufacturing the microporous film is particularly suitable because films with a desired thickness may be produced. The typical thickness of the microporous film produced according to the method mentioned in this invention is less than 150 μm. The preferable thickness is between 15 and 60 μm, more preferably from 15 to 55 μm.

Microporous film of less than 15 $\mu$m is believed to have a weak physical properties, especially its tear strength properties. On the other hand, a film having a thickness of higher than 150 $\mu$m is also not favourable since its higher cost price due to a higher material usage is not expressed in a significant higher quality.

Stretching of the ply may be performed in the conventional way by using various well-known stretching equipment. The ply is at least stretched in the longitudinal stretching direction above its elastic limit. The stretch ratio is usually chosen in the range of 1.5 to 10. Preferably the stretch ratio is in the range of 2 to 6. As used herein, the stretched ratio is determined by the formula:

$$S = L_2 / L_1$$

where S is the stretch ratio, $L_1$ is the distance between two reference points located on the intermediate ply and on a line parallel to the stretching direction, and $L_2$ is the distance between the same two reference points located on the stretched microporous film.

The temperature at which stretching is accomplished may vary widely. In most cases, the film surface temperatures during stretching are in the range of from 20°C to 220°C. The preferred temperatures are in the range of 40°C to 165°C and ideally between 55°C and 130°C.

The microporous film may optionally be stretched in the transversal direction after accomplishing the longitudinal stretching. The transversal stretch ratio lies generally between 1.1 and 10. The preferable transversal stretching ratio is between 1.1 and 4. Generally the degree of the stretching is such that the required pore volume and the claimed pore size distribution are obtained.

According to the present invention, the pores should constitute from 25 to 80 percent by volume of the microporous film. The pore volume was measured as follows:

Of a microporous film sample (size 10 x 10 cm) the volume (V) and weight (W1) was determined. Subsequently the sample was immersed for one minute in water, to which 50 mmol/l SDBS surfactant was added. After one minute the surplus of water was removed from the top- and backside surface by means of a wiper and the weight of the sample was measured immediately (W2). The pore volume was calculated as follows:

$$\text{pore volume} = ((W2 - W1) / V) \times 100$$

When the porosity of the microporous film is lower than 25 percent, the capacity of the film to absorb the ink jet solvent generally becomes too low; in particular the drying speed of the ink jet medium of such films could become unacceptably low. On the other hand, a porosity of higher than 80 percent is difficult to produce by the above mentioned production method and usually a microporous film with such a high porosity has low tensile strength properties.

The amount of filler added to the hydrophobic thermoplastic resin and the suitable filler size depend on the desired properties of the microporous film including tear strength, water vapour transmission rate, stretch ability and pore volume. It is believed that the pore volume created in the microporous film is difficult to obtain in a sufficient manner with an amount of filler of less than about 30 percent by weight. The more we are able to increase the filler amount, the more suitable the film will be due to the increase of the pore volume and porosity. In the present invention the strength of the microporous film is mainly determined by the layer or layers having a low amount of fillers; low meaning ≤ 50% by weight, lower than 30% is generally not beneficial, as using this amount may negatively influence the water penetration speed, but pigment weights between 30 and 50 % by weight can be used depending on the properties one likes to achieve. For a good water permeability it is important that the pores are substantially interconnecting. At filler loads substantially lower than 30% the interconnecting character is considered to be insufficient to provide an adequate water penetration rate. The increase of porosity is mainly achieved by the at least one layer having a filler amount > 50% by weight. In a proper formulation a filler amount as high as 90% by weight can be achieved. Depending on the intended properties filler amounts between 50 and 90% by weight can be used. In the previous art it is necessary to coat the inorganic filler with surface active agents such as fatty acid ester, silicone oil or silanes, in order to reach the desired loading degree in combination with a good dispersion. Using our present invention, that is not necessary anymore.

The average particle size of the filler is generally less than 40 $\mu$m and is preferably in the range of 0.5 and 10 $\mu$m. The desired pore distribution of the microporous film may be obtained by using fillers which have a single average particle size or a mixture of at least two different average particle sizes. According to this invention, a better balance between the pore size distribution, the porosity and the glossiness of the microporous film can be achieved by utilising at least two fillers, wherein the ratio of the biggest average particle size over the smallest average particle size is at least 1.5. Especially for a thicker microporous film, where we need to use a larger particle size in order to have sufficient porosity and volume of interconnecting pores while maintaining the high gloss value, it will be very beneficial to use two or more fillers having different average particle sizes.

The hydrophobic thermoplastic resins suitable for manufacturing the microporous film are available in a huge number and kinds. In general, any substantially water-insoluble thermoplastic polymers, that can be extruded, calendered, pressed or rolled into a ply, film, sheet, strip or web may be used.

The polymer may be a single polymer or a mixture of polymers. The polymers may be homopolymers, copolymers, random polymers, block copolymers, atactic polymers, isotactic polymers, syndiotactic polymers, linear polymers, or branched polymers. When mixtures of polymers are used, the mixtures may be homogeneous, or it may comprise two or more polymeric phases. Examples of classes of suitable thermoplastic polymers include the polyolefins, poly (halo-substituted polyolefins), polyesters, polyamides, polyurethanes, polyureas, poly(vinyl-halides), poly (vinylidene halides), polystyrenes, poly(vinyl esters), polycarbonates, polyethers, polysulfides, polyimides, polysilanes, polysiloxanes, polycaprolactames, polyacrylates, and polymethacrylates. Examples of suitable thermoplastic polymers include high density polyethylene, low density polyethylene, ultra high molecular weight polyethylene, polypropylene (atactic, isotactic or syndiotic), poly(vinyl chloride), polytetrafluroethylene, copolymers of ethylene and alpha-olefins, copolymers of ethylene and acrylic acids, copolymers of ethylene and methacrylic acids, copolymers of ethylene and vinyl acetate, copolymers of propylene and alpha-olefins, poly(vinylidene chloride), copolymers of vinylidene chloride and vinyl acetate, copolymers of vinylidene chloride and vinyl chloride, copolymers of ethylene and propylene, copolymers of ethylene and butene, poly(vinyl acetate), poly(omega-amino-undecanoic acid), poly(methyl methacrylate), poly(hexamethylene adipamide), poly(epsilon-caprolactam).

The preferred thermoplastics are polyolefins comprising polyethylene, polypropylene, co-polymers of ethylene and alpha-olefines, co-polymers of ethylene and acrylic acids, copolymers of ethylene and methacrylic acids, copolymers of ethylene and vinyl acetate, and mixtures thereof.

Using simultaneous or consecutive extrusion, the composition of the hydrophobic thermoplastic resins in the various layers can be different. It was found, however, that it is beneficial to have the same thermoplast or thermoplast mixtures used in the various layers of the extruded ply for economic reasons and for water absorption reasons. In case we want to optimise on stiffness for example it can be advantageous to use different kind of resins in the various layers. Also for the fillers it is beneficial to use the same kind of fillers in the various extruded layers, although it might be advantageous in some cases to deviate from this principle. By using the melt extrusion method we can also vary the thickness of the various layers. It is obvious, that there is a limit to the ratio of the high filled layers compared to the lower filled layers as at a too high ratio (>4/1) we enter than again in an region where we will have web breaks during stretching. A ratio of high filled layers to low filled layers of lower than 1/1 generally has a too low porosity to benefit from the invented structure. A higher ratio of the high filled layers will increase the drying speed in the ink jet application. Typically a ratio of 3 to 1 by weight of high filled to low filled layers will give very good drying properties.

The fillers can be selected from the groups of organic fillers and of inorganic fillers. The examples of organic fillers include wood particles, pulp particles, cellulose type particles, polymer particles such as Teflon™ particles and Kevlar™ particles, nylon particles dispersed in polypropylene, polybutylene terephthalate particles in polypropylene, and polypropylene dispersed in polyethylene terephthalate. The important characteristics of these organic fillers are its size and the shape of the particles. Spheres are preferred and they can be hollow or solid.

Examples of the inorganic fillers are one ore more ingredients selected from the group consisting of calcium carbonate, clay, silica, titanium dioxide, talc, clay, kaolin, magnesium sulphate, barium sulphate, calcium sulphate, aluminium hydroxide, magnesium hydroxide, calcium hydroxide, magnesium oxide, zinc oxide and zeolite. The preferred fillers are selected from calcium carbonate, silica, barium sulphate, titanium dioxide and mixtures thereof.

It has been found during our experiments that the surface tension and the amount of ink solution injected during printing are not the same for all brands of the ink jet ink. Depending on the type and the brand name of the ink jet ink, it is possible to further improve the solvent absorption speed of the microporous film of the present invention. The addition of a hydrophilic component into the mixture of the hydrophobic thermoplastic resin and the filler prior to the extrusion coating has resulted in a remarkable improvement of the solvent absorption speed. The hydrophilic component is an additive compounded with the polymer composition for the purpose of rendering the surface of the microporous film and the pore surface hydrophilic. The hydrophilic component is a surfactant selected from the group of sorbitan fatty acid ester such as sorbitan monooleate, sorbitan monolaurate, sorbitan monostearate and sorbitan tristearate; polyoxyalkylene sorbitan fatty acid ester such as polyoxyethylene sorbitan trioleate; glycerine fatty acid ester such as glycerine monooleate and glycerine monostearate; polyglycerin fatty acid ester such as diglycerin monooleate, diglycerinsesquilaurate, tetraglycerin monooleate and decaglycerin monolaurate; polyoxyalkylene alkyl ether such as polyoxyethylene lauryl ether; polyoxyalkylene fatty acid ester such as polyethylene monolaurate, polyoxyethylene trioleate; polyoxyethylene alkyl mercaptan such as polyoxyethylene dodecyl thioether; polyoxyethylene alkyl phenol such as polyoxyethylene nonyl phenyl ether; pentaerythritol fatty acid ester such as pentaerythritol monostearate; saccharose fatty acid ester such as saccharose laurate; polyoxyethylene fatty acid amide such as polyoxyethylene oleamide; aliphatic amine such as lauryl diethanolamine; and fatty acid amide such as oleamide. Particularly preferred are glycerin monooleate, triglycerol $C_{12}$-$C_{18}$ ester and sorbitan $C_{12}$-$C_{18}$ ester, since these surfactants are almost not extracted from the microporous film when said film is in contact with water. To obtain a suitable degree of hydrophilicity these compounds are preferably added in an amount of from 0.5 to 5 weight%, more preferably from 0.5 to 3 weight%, even more preferably from 1 to 2 weight%. With amounts between 2 and 5% the maximum degree of hydrophilicity is usually reached; contents higher than 5% generally do not further increase the hydrophilicity significantly.

According to the present invention, the microporous film may be adhered to a support through an adhesive layer. The adhesive material can be of any materials that have good properties for adhering the microporous film on the support, and which is permeable for gas and liquid. Examples of such materials are starch, gelatine, gums arabic, pectin, albumin, polyurethanes, polyacrylates and agar-agar. The adhesive layer may comprise further inorganic particles such as silica, alumina, $CaCO_3$, or mixtures thereof. In order to enhance the adhesion properties, the microporous film and/or the support may be treated with corona treatment, plasma treatment or flame treatment prior to applying the adhesive layer.

The absorption speed of solvent of the microporous film that has been adhered to the support as described above, can be further increased by making it more hydrophilic by coating on top of the microporous film a hydrophilic liquid containing water, a water soluble polymer and a surfactant as described in WO-A-02/53391, which is incorporated herein by reference. Said microporous film may either comprise a hydrophobic thermoplastic resin and filler or it may comprise a hydrophobic thermoplastic resin, filler and a hydrophilic component. The same better water absorbance is obtained when the microporous film is impregnated before it is applied to a support. The suitable surfactant species for the impregnation solution can be selected from any surfactant that is classified as cationic surfactants, anionic surfactant, non-ionic surfactants or amphoteric surfactants. Examples of anionic surfactants include, but are not limited to, the fatty acid surfactants such as regular soaps, phosphate ester surfactants, sulphate ester surfactant such as sodium dodecylsulphate, sulphated fatty acid surfactants such as sulfated monoglycerides and other polyols, and sulphated alkanolamides, sulphated ethers, sulphated alkylphenol ethoxylates, sulphated carboxylic acid alkyl esters, aliphatic sulfonates such as sodium dodecylsulphonate, alkyl aryl sulphonates such as sodium dodecyl benzenesulphonate, $\alpha$-sulphocar-boxylic acids and their derivatives. Examples of suitable cationic surfactants includes the groups containing alkyl nitrogen compounds such as simple ammonium salts containing at least one long chain alkyl group and one or more amine hydrogens, and quaternary ammonium compounds in which all amine hydrogens have been replaced by organic radical substitution, and the groups of cationic surfactants that contain heterocyclic materials characterised by the N-alkylpyridinium halides, salts of alkyl-substituted pyridines, morpholinium salts, and imidazolinium derivatives. The non-ionic surfactants include the polyoxy-ethylenes which have the general formula $RX(CH_2CH_2O)_nH$ where R is normally a typical surfactant hydrophobic group, but may also be a polyether such as polyoxypropylene and X is an O, N or another functionality capable of linking the polyoxyethylene chain to the hydrophobe. The "n" represent the average number of the oxyethylene units and should have a value of higher than 5 to impart sufficient water solubility. Other examples of non-ionic surfactants are the derivatives of sugar, derivatives of polyglycerols and other polyols. Examples of amphoteric surfactants are those categorised as the ampholites such as aminocarboxyclic acids and lecithin, betaines and sulfobetaines. The selection of a suitable surfactant depends very much on the surface tension of the microporous film itself. In order to have an effective penetration into the pores of the microporous film it is preferred to use a surfactant that has a surface tension value which is equal, more preferably less than the surface tension value of the microporous film. The anionic surfactants including the group of alkylaryl sulphonate such as sodium dodecyl benzene sulphonate, the aliphatic sulfonates such as sodium dodecyl sulphonates and the sulphate ester surfactant such as Aerosil OT have our preference. The preferred cationic surfactants comprise the groups that contain quartenary ammonium compounds, such as dodecyl trimethyl ammonium chloride. The suitable concentration of the surfactant depends on the amount and kind of the water-soluble polymers. The amount of surfactant in the aqueous solution is higher than the critical aggregation concentration (CAC) value of the surfactant / water-soluble polymer solution itself, preferably higher than the critical micelle concentration (CMC) value. The dry amount of surfactant suitable for making the film hydrophilic is up to 1.5 $g/m^2$, preferably up to 0.5 $g/m^2$.

The water-soluble polymer for the impregnation solution can be selected from any of the polymers categorised as bio-polymers, synthetic polymers and mixtures thereof, as long as it is soluble in water. Examples of classes of bio-polymers include protein such as gelatin, casein and other water-soluble protein, dextrin, and starch. The suitable gelatins are in fact those produced from, among others, the bones and skins of animal through the acid or lime treatment, and also those which are modified afterwards through a chemical reaction, enzymatic treatment or heat treatment. Examples of the suitable gelatins are included acid treated pig skin gelatins, acid treated osseïn gelatins, lime treated ossein gelatins, fish skin gelatins, chemically modified gelatins such as modified gelatins with phthalate group, modified gelatins with quaternary ammonium derivatives, modified gelatins with succinyl and dodecyl succinyl groups, modified gelatin with carbamyl groups, modified gelatin with lauryl groups, modified gelatins with vinyl alcohol groups, modified gelatins with vinyl pyrrolidone, modified gelatins with styrene sulphonate, hydrolysed gelatins and recombinant gelatins. Other examples of suitable bio-polymers are including starch and starch derivates such as cationic starch, amphoteric starch, oxidized starch, and gum arabic.

It is believed that a polymer molecule having an average molecular weight higher than 200 kD is not suitable for this invention, since the molecules may not efficiently penetrate into the pores. On the other hand, polymers with an average molecular weight of smaller than 1 kD will provide too less interaction with the surfactant molecules. The preferred molecular weight for the bio-polymer is thus between 1kD and 200 kD, more preferably between 5 kD and 50 kD.

Examples of synthetic water-soluble polymers are polyvinyl alcohol (PVA), PVA based polymers such as carboxylated polyvinyl alcohol, cellulose derivatives such as polyacryl-amide-hydroxy alkylcellulose, carboxymethylcellulose and hydroxyethylcellulose, polyvinyl pyrrolidone (PVP), polyacrylate, polyacrylamide, polyamideepichlorohydrin resin, alginate, alkalinically soluble copolymers of styrene and maleic acid anhydride, polyaminoamide resins, polyethyleneoxid, polyethylene imine, quaternary ammonium salt polymers, NBR latex, and polyethylene oxide (PEO). The preferred average molecular weight of the synthetic polymers is in the range of 14 kD to 200 kD.

The amount of water-soluble polymer should preferably be higher than or equal to 0.01 weight percent in order to have significant effect on the increase of the absorption and wettability properties of the treated microporous film. The preferred amount of the water-soluble polymers is preferably equal to or higher than 0.1 weight percent. A suitable range for the dry amount of water soluble polymer is up to 2.0 g/m$^2$, preferably between 0.01 and 1.0 g/m$^2$, more preferably between 0.04 and 0.5 g/m$^2$.

In order to further improve the wettability and/or the absorption properties as well as the appearance of the microporous film such as whiteness and glossiness, some appropriate additives thereto may be added into the hydrophilic liquid.

The support which is used in this invention, can optionally be coated on the back side with a polymer matrix comprising at least a polyolefin resin and an anti-static agent. Furthermore, the support is selected from a paper, a photographic base paper, a synthetic paper or a plastic film.

Examples of the material of the plastic film are polyolefins such as polyethylene and polypropylene, vinyl copolymers such as polyvinyl acetate, polyvinyl chloride and polystyrene, polyamide such as 6,6-nylon and 6-nylon, polyesters such as polyethylene terephtalate, polyethylene-2 and 6-naphtalate and polycarbonate, and cellulose acetates such as cellulose triacetate and cellulose diacetate. The microporous film of the present invention might have two different surfaces, depending on the formulation used. The number of layers we can use is in fact only limited by technical reasons. It is possible to use 2,3,4 or 5 layers extruded consecutively or simultaneously, in which high and low filler loaded layers are used in a symmetrical or non symmetrical way. From production point of view simultaneous extrusion, which is known as coextrusion is preferred. If the microporous film is not build up symmetrically we can use both sides of the film to act as the ink-receiving layer. Both have advantages. If we use the lower filled layer as the surface layer gloss is enhanced and if we use the higher filled layer as the ink-receiving layer, the absorption speed is increased.

Additionally an ink-receiving layer may be coated on the surface of the microporous film, which has been adhered onto the support. The ink-receiving layer is characterised by the hygroscopic properties of said layer and its high ability to fix the image with a precise dot size and to provide good image stability. The said ink receiving layer comprises binders, fine porous pigments particles selected from the groups of aluminium oxides such as boehmite and pseudo-boehmite and those of silica such as silica gel, fumed silica and precipitated silica, and optionally various known additives, including surfactants, mordant, etc.

Alternatively, an ink-receiving layer comprising water-soluble binder is also suitable to be coated on the surface of the microporous film. In this case the ink-receiving layer does not substantially contain pigments. This ink receiving formulation provides better protection against dye fading of the printed image than the earlier formulations. The suitable materials for the binder can be selected from gelatine or one of its modified products, polyvinyl alcohol derivatives, NBR latex, cellulose derivatives, quaternary ammonium salt polymers, poly vinyl pyrrolidone, poly-ethylene-oxide, poly acrylic acid, polyurethane, and combinations thereof.

Optionally the ink-receiving layer may comprise other materials to improve the whiteness and the glossiness appearances of the ink jet medium.

In order to further improve the gloss appearance and other additional properties, we may coat an over-coating layer on top of the ink-receiving layer. This layer may comprise cellulose derivatives such as hydroxymethyl cellulose and hydroxyethyl cellulose, poly-vinyl alcohol, polyvinyl alcohol derivatives, gelatin or modified gelatin in combination with a suitable cross-linking agent. The over coating layer is non-porous but is ink permeable.

**EXAMPLES**

The present invention will be explained in detail by the following non-limiting examples, whereby inventive examples are indicated by "E" and comparative examples by "C":

### Example E 1

A microporous film with layer structure A-B was produced according to the following steps:

Layer structure:

- Layer A was a polyolefin LLDPE comprising 70wt.% $CaCO_3$ (average particle size of 2 $\mu$m) and 1 % sorbitan ester as a surfactant.
- Layer B comprised 50% wt% $CaCO_3$ (average particle size of 2 $\mu$m); 49 wt% polyolefin LLDPE; and 1% sorbitan ester as a surfactant.
- The films were subjected to the following processing steps:

- The two layered film was co-extruded at 220°C to form a ply
- The ply was cooled down
- Monoaxial stretching was performed at 70°C with a stretch ratio of 5.
- Thickness is 72 $\mu$m

The thickness of the film was determined by the Lorentzen & Wettre model SE051D2. The measured film thickness was 72 $\mu$m.

### Example E 2

The microporous film from Example E 1 was corona treated on the side B that was laminated to a support of 166 $g/m^2$ base paper. The film and the support were laminated by means of an adhesive solution with the following composition: lime bone gelatin solution in water (20wt %) and silica slurry (grade name sylojet 703A (18 wt% silica gel dispersed in water), supplier: Grace Davison) were mixed in the ratio 36/64.
Total dry weight of the slurry was 18.7wt%. The slurry was coated with a K hand coater BAR3 (wet coating thickness 24 $\mu$m). After drying the coated weight was 5 $g/m^2$.

### Example E 3

The laminated microporous film from Example E 2 was coated with an ink-receiving layer comprising an inorganic pigment and a binder. The pigment (40% suspension of HP14, an aluminium hydrate of boehmite structure purchased from Sasol, Germany) and the binder (10% solution of polyvinyl alcohol Z320 purchased from Nippon Gohsei Europe GmbH) were prepared separately and subsequently mixed. The dry weight ratio between the PVA and HP14 was 1 : 14.
The substrate from Example E 2 was corona treated before the ink receiving layer coating by means of K hand coater Bar 5 (wet coating thickness 50 $\mu$m) and dried at 50°C in an oven. After drying the coated weight was 20 $g/m^2$.

### Example E 4

A microporous film as mentioned in Example E 1 but with a thickness of 36 $\mu$m.

### Example E 5

The microporous film from Example E 4 was corona treated on the side B that was laminated to a support of 166 $g/m^2$ base paper. The film and the support were laminated by means of the adhesive (Gelatin/silica mixture) described in example E 2.

### Example E 6

The laminated microporous film from Example E 5 was coated with the same ink-receiving layer as described in example E 3.

### Example E 7

A microporous film as mentioned in Example E 4 but with a thickness of 43 $\mu$m.

### Example E 8

The microporous film from Example E 7 was corona treated on the side B that was laminated to a support of 166 g/m$^2$ base paper. The film and the support were laminated by means of the adhesive (Gelatin/silica mixture) described in example E 2.

### Example E 9

The laminated microporous film from Example E 8 was coated with the same ink receiving layer as described in example E 3.

### Comparative Example C 1

A microporous film, which was produced at the same conditions as described in Example E 1, except that the microporous film had a monolayer (layer C) structure with the following recipe:

Layer C comprises 50% wt% CaCO$_3$ with an average particle size of 2 $\mu$m. Other components are 49 wt% polyolefin LLDPE and 1% tri glycerol ester as a surfactant.

The thickness of the microporous film after stretching was 32 $\mu$m.

### Comparative Example C 2

The microporous film from comparative Example C 1 was corona treated on the side, which was laminated to a support of 166 g/m$^2$ base paper. The film and the support were laminated by means of the adhesive (Gelatin/silica mixture) described in example E 2.

### Comparative Example C 3

The laminated microporous film from comparative Example C 2 was coated with the same ink receiving layer as described in example E 3.

### Comparative Example C 4

A microporous film as mentioned in comparative Example C 1 but with a thickness of 53 $\mu$m.

### Comparative Example C 5

The microporous film from comparative Example C 4 was corona treated on the side, which was laminated to a support of 166 g/m$^2$ base paper. The film and the support were laminated by means of the adhesive (Gelatin/silica mixture) described in example E 2.

### Comparative Example C 6

The laminated microporous film from Example C 5 was coated with the same ink receiving layer as described in example E 3.

### Comparative Example C 7

It was attempted to produce a microporous film with a monolayer structure according to the following steps:

- Layer C comprises 70% wt% CaCO$_3$ with an average particle size of 2 $\mu$m. Other components are 29 wt% polyolefin LLDPE and 1% tri glycerol ester as a surfactant.
- The monolayered film was extruded at 220°C to form a ply
- The ply was cooled down
- Monoaxial stretching was performed at 70°C with a stretch ratio of 5. During stretching the film broke.

For printing of the examples an Epson 890 ink jet printer was used. The image which was printed comprises a test patch with various colors and color densities.

The drying speed of the prints was determined by putting 10 seconds after finishing of the printing an A4 size sheet of plain copying paper supreme print 'n copy (80 g/m$^2$, supplier: Proost en Brandt) on the test print and applying a weight of 500 gram, distributed evenly, to the A4 sheet. After one minute the sheet was removed. The drying speed was qualitatively judged by checking the amount of ink, which was transferred to the plain copying paper. If almost no ink was transferred we judged the drying to be very good (4) and if very much ink was transferred to the plain copying paper, even in the areas where not much ink was printed in the original this drying was judged to be bad(1). In a similar way we could identify good (3) and not so good(2) drying.

**Table 1. Physical properties of the microporous films**

| Example | Thickness ($\mu$m) | Basis weight (g/m$^2$) | Void volume (%) | Thickness ratio[1] | Air permeability (sec)[2] | Ink penetration time (sec)[3] | Ink penetration rate ($\mu$m/s)[4] |
|---|---|---|---|---|---|---|---|
| E 1 | 72 | 58.3 | 42 | 3 | 68 | 2.2 | 33 |
| E 4 | 36 | 30.0 | 44 | 1 | 40 | 0.5 | 72 |
| E 7 | 43 | 33.7 | 46 | 3 | 27 | 0.5 | 86 |
| C 1 | 32 | 27.5 | 31 | Mono layer | 161 | 3.4 | 9 |
| C 4 | 53 | 46.2 | 23 | Mono layer | 428 | 13.9 | 4 |

1) Layer A/Layer B
2) Air permeability was measured by means of the Bekk smoothness tester (supplier: Messmer Büchel) Settings: Volume 1/10, pressure interval 50.66 - 29.33 kPa.
3) Ink penetration time was measured by putting an ink droplet of 0.2 $\mu$l Epson 770 black ink (MJIC7) on one side of the porous film. The penetration time is the time (seconds) that the ink needs to reach the opposite side of the film. This was recorded visually.
4) Ink penetration rate is the penetration time per unit thickness.

**Table 2 Print evaluations of the ink-jet sheets containing a paper base, a microporous film and an ink-receiving layer.**

| Example | Drying speed of ink jet print |
|---|---|
| E3 | 4 |
| E6 | 3 |
| E9 | 4 |
| C3 | 1 |
| C6 | 1 |
| Ranking: 1: slow drying, up to 4: quick drying | |

From Table 1 and 2 we can conclude, that the microporous sheet of the present invention has very good air permeability and ink penetration rate (which can be generalised to hydrophilic liquid penetration rate). When used in an ink jet application, the films according to the invention give a very good drying speed.

**Claims**

1. Microporous film comprising a multilayer of hydrophobic thermoplastic resins in which at least one of the layers comprises at least one filler in an amount of > 50 wt.% and a hydrophilic component and in which at least one of the remaining layers contains at least one filler in an amount > 30 wt.% and ≤ 50 wt.%.

2. Microporous film according to claim 1, in which the multilayer of hydrophobic resins is made hydrophilic or more hydrophilic by impregnating the film with a hydrophilic liquid followed by drying.

3. Microporous film according to any of the previous claims, wherein said microporous film is obtainable by a method comprising the steps of:

    - preparing at least one thermoplastic resin, comprising at least one polyolefin and one inorganic and/or organic filler in an amount > 50% and optionally a hydrophilic component;
    - preparing at least one thermoplastic resin, comprising at least one polyolefin and at least one inorganic and/or organic filler in an amount > 30% and ≤ 50% and optionally a hydrophilic component;
    - extruding at least both resins consecutively or simultaneously at elevated temperatures to form a ply thereof;
    - pre-stretching the ply;
    - cooling said ply until the ply is solidified; and
    - stretching said cooled ply to form said microporous film.

4. Microporous film according to any of the previous claims, wherein $1.5 < S < 10$ and preferably $2 < S < 6$; S being the stretch ratio $= L_2 / L_1$; $L_1$ is the distance between two reference points located on the melt extruded ply on a line parallel to the stretching direction, and $L_2$ is the distance between the same two reference points located on the stretched microporous film.

5. Microporous film according to any of the previous claims, wherein said microporous film has a thickness of less than 150 $\mu$m, preferably of from 15 to 100 $\mu$m, more preferably from 15 to 60 $\mu$m.

6. Microporous film according to any of the previous claims, wherein the ratio of the high filled layer or layers versus the low filled layer or layers is between 1/1 and 4/1.

7. Microporous film according to any of the previous claims, wherein the total void volume of said microporous film is at least 25% of said microporous film.

8. Microporous film according to claim 1, wherein the hydrophobic thermoplastic resin comprises a polyolefin selected from the group consisting of polyethylene, polypropylene, co-polymers of ethylene and alpha-olefins, co-polymers of ethylene and acrylic acids, copolymers of ethylene and methacrylic acids, copolymers of ethylene and vinyl acetate, and mixtures thereof.

9. Microporous film according to any of the previous claims, wherein the filler in at least one of said layers has an average particle size of less than 40 $\mu$m, preferably between 0.5 $\mu$m and 10 $\mu$m.

10. Microporous film according to any of the previous claims, wherein said filler is selected from the group consisting of calcium carbonate, barium sulphate, silica, titanium dioxide and mixtures thereof.

11. Microporous film according to claim 1-10, in which the hydrophilic component is selected from the group consisting of sorbitan fatty acid ester, polyoxyalkylene sorbitan fatty acid ester, glycerin fatty acid ester, polyglycerin fatty acid ester, polyoxyalkylene alkyl ether and mixtures thereof.

12. Microporous film according to claim 1-11, wherein the amount of said hydrophilic component is less than 5 weight% of the total weight of said microporous film, preferably between 0.5 and 3 weight%.

13. Microporous film according to claim 2-12, wherein the hydrophilic liquid comprises a water soluble polymer and a surfactant selected from the anionic surfactants comprising alkyl aryl sulphonates, alkyl sulphate ester, sulphosuccinic acid alkyl ester and aliphatic sulphonates, and from the cationic surfactants comprising quaternary ammonium compounds.

14. Microporous film according to claim 13, wherein the water soluble polymer is selected from the group consisting of gelatin, modified gelatin, starch, PVA-based polymers, PVP, PEO, polyacryl amide, polyacrylate and mixtures thereof.

15. Microporous film according to claim 13, wherein the dry amount of said surfactant is between 0 and 1.5 gram/m$^2$ and the dry amount of said water soluble polymer is between 0 and 2.0 g/m$^2$.

16. Recording medium comprising a support and the microporous film according to any of the previous claims.

17. Medium according to claim 16, in which the medium is made more hydrophilic by impregnating the medium with a hydrophilic liquid followed by drying.

18. Medium according to claim 17, wherein the hydrophilic liquid comprises a water soluble polymer and a surfactant selected from the anionic surfactants comprising alkyl aryl sulphonates, alkyl sulphate ester, sulphosuccinic acid alkyl ester and aliphatic sulphonates, and from the cationic surfactants comprising quaternary ammonium compounds.

19. Medium according to any of the claims 16-18, wherein an ink-receiving layer is coated on the surface of said microporous film.

20. Medium according to claim 19, wherein said ink receiving layer comprises inorganic particles selected from the group consisting of silica, boehmite, pseudo-boehmite and combinations thereof.

21. Medium according to claim 19 or 20, wherein said ink receiving layer comprises a binder selected from the group consisting of gelatin, modified gelatin, polyvinyl alcohol, polyvinyl alcohol derivatives, polyvinyl pyrolidone, polyethyleneoxide, polyacrylic acid, polyurethane, cellulose derivatives and mixtures thereof.

22. Medium according to any of the claims 16-21, wherein an ink-permeable protective layer is coated on top of said ink receiving layer.

23. Medium according to claim 22, wherein said protective layer comprises a polymer selected from the group consisting of cellulose derivatives, polyvinyl alcohol derivatives, gelatin, modified gelatin and combinations thereof.

24. Method of producing the medium of claim 16-23, in which the microporous film of claim 1-15 is adhered to a support through an adhesive layer.

25. Recording medium according to any of the claims 16-23, wherein said recording medium is an inkjet recording medium, Giclée printing recording medium, colour copying recording medium, screen printing recording medium, gravure recording medium, dye-sublimation recording medium or flexography recording medium.

26. A method of forming a permanent, precise ink jet image comprising the step of: providing an ink jet recording medium as is described in any of the claims 16-23, and introducing ink jet ink into contact with the medium in the pattern of a desired image.

**Patentansprüche**

1. Mikroporöser Film, umfassend eine Mehrfachschicht aus hydrophoben thermoplastischen Harzen, in welcher wenigstens eine der Schichten wenigstens einen Füllstoff in einer Menge von > 50 Gew.-% und eine hydrophile Komponente umfasst und in welcher wenigstens eine der übrigen Schichten wenigstens einen Füllstoff in einer Menge > 30 Gew.-% und ≤ 50 Gew.-% enthält.

2. Mikroporöser Film nach Anspruch 1, in welchem die Mehrfachschicht aus hydrophoben Harzen durch Imprägnieren des Films mit einer hydrophilen Flüssigkeit, gefolgt von Trocknen, hydrophil oder hydrophiler gemacht ist.

3. Mikroporöser Film nach einem der vorangehenden Ansprüche, wobei der mikroporöse Film durch ein Verfahren erhältlich ist, das die folgenden Schritte umfasst:

- Herstellen wenigstens eines thermoplastischen Harzes, umfassend wenigstens ein Polyolefin und einen anorganischen und/oder organischen Füllstoff in einer Menge > 50% und gegebenenfalls eine hydrophile Komponente;
- Herstellen wenigstens eines thermoplastischen Harzes, umfassend wenigstens ein Polyolefin und wenigstens einen anorganischen und/oder organischen Füllstoff in einer Menge > 30% und ≤ 50% und gegebenenfalls eine hydrophile Komponente;
- Extrudieren wenigstens beider Harze nacheinander oder gleichzeitig bei erhöhten Temperaturen, um eine Lage daraus zu bilden;
- Vorstrecken der Lage;
- Kühlen der Lage, bis die Lage verfestigt ist; und
- Strecken der gekühlten Lage, um den mikroporösen Film zu bilden.

4. Mikroporöser Film nach einem der vorangehenden Ansprüche, wobei $1,5 < S < 10$ und vorzugsweise $2 < S < 6$; wobei S das Streckverhältnis $= L_2/L_1$ ist; $L_1$ ist der Abstand zwischen zwei Bezugspunkten, die sich auf der schmelzextrudierten Lage auf einer Linie parallel zu der Streckrichtung befinden, und $L_2$ ist der Abstand zwischen den gleichen zwei Bezugspunkten, die sich auf dem verstreckten mikroporösen Film befinden.

5. Mikroporöser Film nach einem der vorangehenden Ansprüche, wobei der mikroporöse Film eine Dicke von weniger als 150 $\mu$m, vorzugsweise von 15 bis 100 $\mu$m, mehr bevorzugt von 15 bis 60 $\mu$m aufweist.

6. Mikroporöser Film nach einem der vorangehenden Ansprüche, wobei das Verhältnis der hochgefüllten Schicht oder Schichten gegenüber der niedriggefüllten Schicht oder Schichten zwischen 1/1 und 4/1 liegt.

7. Mikroporöser Film nach einem der vorangehenden Ansprüche, wobei das gesamte Porenvolumen des mikroporösen Films wenigstens 25% des mikroporösen Films beträgt.

8. Mikroporöser Film nach Anspruch 1, wobei das hydrophobe thermoplastische Harz ein Polyolefin umfasst, ausgewählt aus der Gruppe bestehend aus Polyethylen, Polypropylen, Copolymeren von Ethylen und Alpha-Olefinen, Copolymeren von Ethylen und Acrylsäuren, Copolymeren von Ethylen und Methacrylsäuren, Copolymeren von Ethylen und Vinylacetat und Gemischen davon.

9. Mikroporöser Film nach einem der vorangehenden Ansprüche, wobei der Füllstoff in wenigstens einer der Schichten eine mittlere Teilchengröße von weniger als 40 $\mu$m, vorzugsweise zwischen 0,5 $\mu$m und 10 $\mu$m aufweist.

10. Mikroporöser Film nach einem der vorangehenden Ansprüche, wobei der Füllstoff ausgewählt ist aus der Gruppe bestehend aus Calciumcarbonat, Bariumsulfat, Siliciumdioxid, Titandioxid und Gemischen davon.

11. Mikroporöser Film nach Anspruch 1-10, in welchem die hydrophile Komponente ausgewählt ist aus der Gruppe bestehend aus Sorbitanfettsäureester, Polyoxyalkylensorbitanfettsäureester, Glycerinfettsäureester, Polyglycerinfettsäureester, Polyoxyalkylenalkylether und Gemischen davon.

12. Mikroporöser Film nach Anspruch 1-11, worin die Menge der hydrophilen Komponente weniger als 5 Gew.-%, bezogen auf das Gesamtgewicht des mikroporösen Films, vorzugsweise zwischen 0,5 und 3 Gew.-% beträgt.

13. Mikroporöser Film nach Anspruch 2-12, worin die hydrophile Flüssigkeit ein wasserlösliches Polymer und eine oberflächenaktive Substanz, ausgewählt aus den anionischen oberflächenaktiven Substanzen, umfassend Alkylarylsulfonate, Alkylsulfatester, Sulfobernsteinsäurealkylester und aliphatische Sulfonate, und aus den kationischen oberflächenaktiven Substanzen, umfassend quaternäre Ammoniumverbindungen, umfasst.

14. Mikroporöser Film nach Anspruch 13, wobei das wasserlösliche Polymer ausgewählt ist aus der Gruppe bestehend aus Gelatine, modifizierter Gelatine, Stärke, Polymeren auf PVA-Basis, PVP, PEO, Polyacrylamid, Polyacrylat und Gemischen davon.

15. Mikroporöser Film nach Anspruch 13, wobei die Trockenmenge der oberflächenaktiven Substanz zwischen 0 und 1,5 g/m$^2$ beträgt und die Trockenmenge des wasserlöslichen Polymers zwischen 0 und 2,0 g/m$^2$ beträgt.

16. Aufzeichnungsmedium, umfassend einen Träger und den mikroporösen Film nach einem der vorangehenden Ansprüche.

17. Medium nach Anspruch 16, wobei das Medium durch Imprägnieren des Mediums mit einer hydrophilen Flüssigkeit, gefolgt von Trocknen, hydrophiler gemacht ist.

18. Medium nach Anspruch 17, wobei die hydrophile Flüssigkeit ein wasserlösliches Polymer und eine oberflächenaktive Substanz, ausgewählt aus den anionischen oberflächenaktiven Substanzen, umfassend Alkylarylsulfonate, Alkylsulfatester, Sulfobernsteinsäurealkylester und aliphatische Sulfonate, und aus den kationischen oberflächenaktiven Substanzen, umfassend quaternäre Ammoniumverbindungen, umfasst.

19. Medium nach einem der Ansprüche 16-18, wobei eine tintenaufnehmende Schicht auf die Oberfläche des mikroporösen Films aufgebracht ist.

20. Medium nach Anspruch 19, wobei die tintenaufnehmende Schicht anorganische Teilchen, ausgewählt aus der Gruppe bestehend aus Siliciumdioxid, Böhmit, Pseudoböhmit und Kombination davon, umfasst.

21. Medium nach Anspruch 19 oder 20, wobei die tintenaufnehmende Schicht ein Bindemittel, ausgewählt aus der Gruppe bestehend aus Gelatine, modifizierter Gelatine, Polyvinylalkohol, Polyvinylalkoholderivaten, Polyvinylpyrrolidon, Polyethylenoxid, Polyacrylsäure, Polyurethan, Cellulosederivaten und Gemischen davon, umfasst.

22. Medium nach einem der Ansprüche 16-21, wobei eine tintendurchlässige Schutzschicht auf die Oberseite der tintenaufnehmenden Schicht aufgebracht ist.

23. Medium nach Anspruch 22, wobei die Schutzschicht ein Polymer, ausgewählt aus der Gruppe bestehend aus Cellulosederivaten, Polyvinylalkoholderivaten, Gelatine, modifizierter Gelatine und Kombinationen davon, umfasst.

24. Verfahren zum Herstellen des Mediums nach Anspruch 16-23, in welchem der mikroporöse Film nach Anspruch 1-15 durch eine Klebstoffschicht an einen Träger angeklebt wird.

25. Aufzeichnungsmedium nach einem der Ansprüche 16-23, wobei das Aufzeichnungsmedium ein Tintenstrahl-Aufzeichnungsmedium, Giclée-Druck-Aufzeichnungsmedium, Farbkopier-Aufzeichnungsmedium, Siebdruck-Aufzeichnungsmedium, Tiefdruck-Aufzeichnungsmedium, Farbstoffsublimations-Aufzeichnungsmedium oder Flexographie-Aufzeichnungsmedium ist.

26. Verfahren zum Bilden eines permanenten, präzisen Tintenstrahlbildes, umfassend den Schritt: Bereitstellen eines Tintenstrahl-Aufzeichnungsmediums, wie es in einem der Ansprüche 16-23 beschrieben ist, und Inkontaktbringen von Tintenstrahltinte mit dem Medium in dem Muster eines gewünschten Bildes.

**Revendications**

1. Film microporeux comprenant une multicouche de résines thermoplastiques hydrophobes, dans lequel au moins l'une des couches comprend au moins une charge en une quantité > 50 % en poids et un composant hydrophile et dans lequel au moins l'une des couches restantes contient au moins une charge en une quantité > 30 % en poids et ≤ 50 % en poids.

2. Film microporeux selon la revendication 1, dans lequel la multicouche de résines hydrophobes est rendue hydrophile ou plus hydrophile par imprégnation du film avec un liquide hydrophile, suivie d'un séchage.

3. Film microporeux selon l'une quelconque des revendications précédentes, lequel dit film microporeux peut être obtenu par un procédé comprenant les étapes consistant à :

   - préparer au moins une résine thermoplastique, comprenant au moins une polyoléfine et une charge inorganique et/ou organique en une quantité > 50 % et éventuellement un composant hydrophile ;
   - préparer au moins une résine thermoplastique, comprenant au moins une polyoléfine et au moins une charge inorganique et/ou organique en une quantité > 30 % et ≤ 50 % et éventuellement un composant hydrophile ;
   - extruder les au moins deux résines successivement ou simultanément à des températures élevées pour former une couche de celles-ci ;
   - pré-étirer la couche ;
   - refroidir ladite couche jusqu'à ce que la couche soit solidifiée ; et
   - étirer ladite couche refroidie pour former ledit film microporeux.

4. Film microporeux selon l'une quelconque des revendications précédentes, dans lequel $1,5 < S < 10$ et de préférence $2 < S < 6$ ; S étant le rapport d'étirage $= L_2/L_1$ ; $L_1$ est la distance entre deux points de référence localisés sur la couche extrudée à l'état fondu sur une ligne parallèle à la direction d'étirage, et $L_2$ est la distance entre les deux mêmes points de référence localisés sur le film microporeux étiré.

**5.** Film microporeux selon l'une quelconque des revendications précédentes, lequel dit film microporeux a une épaisseur inférieure à 150 $\mu$m, de préférence de 15 à 100 $\mu$m, mieux encore de 15 à 60 $\mu$m.

**6.** Film microporeux selon l'une quelconque des revendications précédentes, dans lequel le rapport entre la ou des couches fortement chargées et la ou les couches faiblement chargées est compris entre 1/1 et 4/1.

**7.** Film microporeux selon l'une quelconque des revendications précédentes, dans lequel le volume de vide total dudit film microporeux est d'au moins 25 % dudit film microporeux.

**8.** Film microporeux selon la revendication 1, dans lequel la résine thermoplastique hydrophobe comprend une polyoléfine choisie dans le groupe constitué par le polyéthylène, le polypropylène, les copolymères d'éthylène et d'$\alpha$-oléfines, les copolymères d'éthylène et d'acides acryliques, les copolymères d'éthylène et d'acides méthacryliques, les copolymères d'éthylène et d'acétate de vinyle, et leurs mélanges.

**9.** Film microporeux selon l'une quelconque des revendications précédentes, dans lequel la charge dans au moins l'une desdites couches a une granulométrie moyenne inférieure à 40 $\mu$m, de préférence comprise entre 0,5 $\mu$m et 10 $\mu$m.

**10.** Film microporeux selon l'une quelconque des revendications précédentes, dans lequel ladite charge est choisie dans le groupe constitué par le carbonate de calcium, le sulfate de baryum, la silice, le dioxyde de titane et leurs mélanges.

**11.** Film microporeux selon les revendications 1 à 10, dans lequel le composant hydrophile est choisi dans le groupe constitué par un ester d'acide gras et de sorbitan, un ester d'acide gras et de sorbitan polyoxyalkyléné, un ester d'acide gras et de glycérol, un ester d'acide gras et de polyglycérol, un alkyléther polyoxyalkyléné, et leurs mélanges.

**12.** Film microporeux selon les revendications 1 à 11, dans lequel la quantité dudit composant hydrophile est inférieure à 5 % en poids du poids total dudit film microporeux, de préférence comprise entre 0,5 et 3 % en poids.

**13.** Film microporeux selon les revendications 2 à 12, dans lequel le liquide hydrophile comprend un polymère soluble dans l'eau et un tensioactif choisi parmi les tensioactifs anioniques comprenant les alkylarylsulfonates, les esters alkylsulfates, les esters alkyliques d'acide sulfosuccinique et les sulfonates aliphatiques, et parmi les tensioactifs cationiques comprenant les composés d'ammonium quaternaire.

**14.** Film microporeux selon la revendication 13, dans lequel le polymère soluble dans l'eau est choisi dans le groupe constitué par la gélatine, la gélatine modifiée, l'amidon, les polymères à base de PVA, la PVP, le PEO, le polyacrylamide, les polyacrylates et leurs mélanges.

**15.** Film microporeux selon la revendication 13, dans lequel ledit tensioactif est compris entre 0 et 1,5 grammes/m$^2$ et la quantité sèche dudit polymère soluble dans l'eau est comprise entre 0 et 2,0 g/m$^2$.

**16.** Support d'enregistrement comprenant un support et le film microporeux selon l'une quelconque des revendications précédentes.

**17.** Support selon la revendication 16, lequel support est rendu plus hydrophile par imprégnation du support avec un liquide hydrophile, suivie d'un séchage.

**18.** Support selon la revendication 17, dans lequel le liquide hydrophile comprend un polymère soluble dans l'eau et un tensioactif choisi parmi les tensioactifs anioniques comprenant les alkylarylsulfonates, les esters alkylsulfates, les esters alkyliques d'acide sulfosuccinique et les sulfonates aliphatiques, et parmi les tensioactifs cationiques comprenant les composés d'ammonium quaternaire.

**19.** Support selon l'une quelconque des revendications 16 à 18, dans lequel une couche recevant l'encre est déposée sur la surface dudit film microporeux.

**20.** Support selon la revendication 19, dans lequel ladite couche recevant l'encre comprend des particules inorganiques choisies dans le groupe constitué par la silice, la boehmite, la pseudo-boehmite et leurs combinaisons.

21. Support selon la revendication 19 ou 20, dans lequel ladite couche recevant l'encre comprend un liant choisi dans le groupe constitué par la gélatine, la gélatine modifiée, le poly(alcool vinylique), les dérivés de poly(alcool vinylique), la polyvinylpyrrolidone, le poly(oxyde d'éthylène), le poly(acide acrylique), le polyuréthane, les dérivés de cellulose, et leurs mélanges.

22. Support selon l'une quelconque des revendications 16 à 21, dans lequel une couche protectrice perméable à l'encre est déposée au-dessus de ladite couche recevant l'encre.

23. Support selon la revendication 22, dans lequel ladite couche protectrice comprend un polymère choisi dans le groupe constitué par les dérivés de cellulose, les dérivés de poly(alcool vinylique), la gélatine, la gélatine modifiée et leurs combinaisons.

24. Procédé de production du support des revendications 16 à 23, dans lequel on fait adhérer le film microporeux des revendications 1 à 15 sur un support par l'intermédiaire d'une couche adhésive.

25. Support d'enregistrement selon l'une quelconque des revendications 16 à 23, lequel dit support d'enregistrement est un support d'enregistrement par jet d'encre, un support d'enregistrement par estampage numérique, un support d'enregistrement par copie couleur, un support d'enregistrement par sérigraphie, un support d'enregistrement par gravure, un support d'enregistrement par sublimation de colorant ou un support d'enregistrement par flexographie.

26. Procédé pour former une image par jet d'encre précise, permanente, comprenant les étapes consistant à : disposer d'un support d'enregistrement par jet d'encre tel que décrit dans l'une quelconque des revendications 16 à 23, et introduire une encre pour jet d'encre en contact avec le support selon le motif d'une image souhaitée.